# EUROPÄISCHE PATENTSCHRIFT

(11) **EP 2 183 146 B1**
(45) Veröffentlichungstag und Bekanntmachung des Hinweises auf die Patenterteilung: **01.12.2010**
(21) Anmeldenummer: 08785074.9
(22) Anmeldetag: 25.07.2008
(51) Int. Cl.: B62B 9/20

(54) **KINDERWAGEN MIT WENIGSTENS EINEM VERSTELLBAREN HANDGRIFF**
PRAM WITH AT LEAST ONE ADJUSTABLE HANDLE
POUSSETTE POURVUE D'AU MOINS UNE POIGNÉE RÉGLABLE

(30) Priorität: 27.07.2007 DE 102007035758
(43) Veröffentlichungstag der Anmeldung: 12.05.2010
(73) Patentinhaber: Endepro Gmbh, 96257 Redwitz a.d. Rodach (DE)
(72) Erfinder: POPP, Alexander, 96257 Redwitz a.d. Rodach (DE)
(74) Vertreter: Küchler, Stefan
(86) Internationale Anmeldenummer: PCT/EP2008/006121
(87) Internationale Veröffentlichungsnummer: WO 2009/015827

(56) Entgegenhaltungen:
- BE-A- 528 038
- DE-A1- 19 935 802
- DE-U1- 29 811 026

## Beschreibung

Die Erfindung, wie beansprucht im unabhängigen Auspruch 1 und im unabhängigen Auspruch 2, richtet sich auf einen Kinderwagen, -buggy od. dgl. mit einem Gestell, mehreren Rädern, einem Aufsatz und wenigstens einem höhenverstellbaren Handgriff.

Da Kinderwagen, -buggies und dgl. von den unterschiedlichsten Personen geschoben werden, besteht ein Bedürfnis daran, den/die Handgriff(e) in der Höhe verstellbar zu gestalten, und zwar möglichst stufenlos. Im Gegensatz zu Schiebebügeln gibt es darüber hinaus bei zwei voneinander getrennten Handgriffen oftmals noch das Bedürfnis, dieselben auch in unterschiedlichen Schwenkwinkeln einzustellen, also bspw. etwa in einer Linie aufeinander zu weisend, oder etwa parallel zueinander aufwärts strebend, oder weitere Stellungen dazwischen oder jenseits der oben erwähnten Einstellungen.

Andererseits werden gerade Kinderbuggies - früher auch als Sportwagen bezeichnet - oftmals als leicht transportable Kinderfahrgelegenheit für etwas ältere Kinder benutzt, welche bspw. mit wenigen Handgriffen zusammenlegbar und schnell in einem Kofferraum verstaubar sind, bspw. für eine sonntägliche Kaffeefahrt od. dgl. Dabei ist die Möglichkeit des schnellen Zerlegens und Zusammenbaus - ohne umständliches Hantieren - besonders wichtig, was natürlich auch für Hand- oder Schiebegriffe gilt.

Außerdem soll eine dafür geeignete Mechanik den Preis des Kinderwagens oder Buggys nicht unnötig verteuern.

Dies gelingt dadurch, dass der/die Handgriff(e) mit wenigstens (je) einem in (je) ein Rohr des Gestells eintauchenden Element gekoppelt oder verbunden ist/sind, dessen/deren Querschnitt(e) in einem ersten Zustand (geringfügig) kleiner ist/sind als der Innenquerschnitt des Rohres, und in einem zweiten Zustand zumindest partiell nach außen preß- oder spreizbar ist/sind, um sich innerhalb des Rohres festzuklemmen.

Durch eine solche Klemmvorrichtung kann der Handgriff in jeder beliebigen Höhenposition und/oder Drehposition festgeklemmt und damit stufenlos eingestellt werden. Diese Verstellmechanik ist außerdem relativ einfach aufgebaut und daher preiswert. Sie eignet sich überdies für den Einbau in ein Rohr eines Kinderwagen- oder Kinderbuggy-Fahrgestells.

Indem wenigstens ein verstellbares Element als elastischer Ring ausgebildet ist, läßt sich dessen Außenumfang in radialer Richtung kräftig auseinander pressen. Ein Ring, d.h., ein zweifach zusammenhängender Körper, erfährt im Gegensatz zu einem nur einfach zusammenhängenden Körper nur indirekt eine der radialen Ausdehnung entgegen wirkende Kraft, nämlich infolge einer der Vergrößerung seines Umfangs entgegen wirkenden inneren Spannung. Die Elastizität des Körpers erlaubt diesem eine weite, zerstörungsfreie Dehnung bereits bei einer vergleichsweise geringen Spannung. Außerdem könnte an der Innenseite eines Rings direkt eine radial nach außen gerichtete Kraft eingeleitet werden. Eine solche radiale Spreizung würde innerhalb des ringförmigen Körpers einen radialen Druck aufbauen und damit den Außenmantel desselben nach außen zwingen.

Die DE 199 35802 beschreibt einen solchen kinderwagen und offenbart alle Merkmale der Oberbegriffe der unabhängigen Auspruche 1 und 2.

Demnach ergibt sich das die Erfindung initiierende Problem, die Handgriffe eines Kinderwagens oder -buggys mittels einer preiswerten Mechanik universell, einfach und schnell verstell- und arretierbar zu gestalten, wobei die Mechanik sich für einen Anschluß bzw. einen An- oder Einbau an/in ein Rohr eines Kinderwagen oder Kinderbuggy-Fahrgestells eignen soll.

Es hat sich als günstig erwiesen, dass gemäß der Erfindung wenigstens ein elastischer Ring mit einem axialen Druck beaufschlagbar ist. Diese Maßnahme führt im Endeffekt ebenfalls zu einer radialen Spreizung des Außenmantels, da der ringförmige Körper versucht, einer axialen Stauchung durch eine Streckung in radialer Richtung auszuweichen, unter Beibehaltung seiner (radialen) Proportionen, was nur in Verbindung mit einer Vergrößerung seines Außenumfangs möglich ist. (Weitgehend) homogene (Elastizitäts-) Eigenschaften des ringförmigen Körpers erlauben die Umwandlung einer vergleichsweise geringen Spannung in eine relativ starke, zerstörungsfreie Verformung.

Auf konstruktiv besonders einfache Weise läßt sich ein axialer Druck zwischen den beiden Stirnseiten des ringförmigen Körpers mit zwei in axialer Richtung gegeneinander verstellbaren Elementen hervorrufen, zwischen enden sich der ringförmige Körper befindet und bei Bedarf eingeklemmt werden kann.

Gemäß der Erfindung sind die beiden, in axialer Richtung gegeneinander verstellbaren Elemente konzentrisch zueinander angeordnet sind, entsprechend dem etwa konstanten Querschnitt eines Rohrs des Fahrgestells eines Kinderwagens oder -buggys. Vorzugsweise kann es sich bei den Klemmelementen jeweils um scheiben-, insbesondere kreisscheibenförmige oder ringscheibenförmige bzw. kreisringförmige Körper handeln, vorzugsweise aus Metall oder einem ähnlich festen bzw. steifen Material.

Eine bevorzugte Besonderheit der Erfindung liegt darin, dass der Abstand des aufspreizbaren Körpers zu dem Handgriff oder dessen Anschlußgelenk konstant, d.h. festgelegt ist. Infolgedessen ist der aufspreizbare Körper zusammen mit dem Handgriff verstellbar, also auch den Spreizkörper axial umgreifende und ggf. zusammen pressende Elemente. Dies läßt sich erreichen, indem beide, Axialdruck erzeugende Körper mit der verstellbaren Handgriff-Einheit verbunden sind. Eine solche Verbindung kann bspw. mittels Stangen und/oder Rohren, ggf. auch mit einem Draht oder sonstigen Zugmittel, bewirkt werden.

Unter der Prämisse, dass eine rotationssymmetrische Anordnung eine gleichmäßige Kraftverteilung verursacht und damit unerwünschten Verklemmungen der verstellbaren Einheit innerhalb eines Rohrs vorbeugt, ist einer Anordnung der Vorzug zu geben, wobei eines der beiden gegeneinander verstellbaren Elemente als Rohr, Hülse od. dgl. und das andere als dieses rohr- oder hülsenförmige Element durchgreifende Stange, Rohr, und/oder als Draht oder sonstiges Zugmittel, ausgebildet ist.

Naturgemäß muß eine mit dem unteren Klemmelement verbundene Stange, Rohr od. dgl. den/die elastischen Ring(e) durchgreifen, um eine Verbindung zu der Haltegriff-Einheit herzustellen.

Eine den aufspreizbaren Körper durchgreifende Stange, Rohr od. dgl. sollte sich jenseits, d.h. unterhalb des/der elastischen Rings (-e) querschnittlich erweitern, bspw. durch eine angeschraubte Scheibe, um eine ringförmige untere Stirnseite des aufspreizbaren Körpers zu untergreifen.

Um die Drehstellung eines festgeklemmten Spreizkörpers möglichst verwindungsfrei an einen Handgriff zu übertragen, sollten Verwindungen von Verbindungsstangen möglichst vermieden werden. Zu diesem Zweck empfiehlt die Erfindung, dass die Stange einen von der Kreisform abweichenden Querschnitt aufweist, bspw. einen elliptischen, länglichen, kreuz- oder sternförmigen Querschnitt. Eine solche Konstruktionsvorschrift berücksichtigt, dass radial weiter außen liegende Bereiche eines Verbindungsprofils torsionssteifer sind als weiter innen liegende Bereiche. Eine ideale Querschnittsform sind bspw. Verbindungsrohre. Eine solche Geometrie sollte daher auch ein zentrales Verbindungsprofil aufweisen.

Eine zentrale Stange, Rohr od. dgl. sollte gegenüber einem (-er) diese(s) umgebenden Rohr, Hülse od. dgl. in axialer Richtung verschiebbar sein. Dadurch ist eine axiale Relatiwerstellung zwischen diesen beiden Elementen und damit auch zwischen den aufspreizbaren Körper an dessen Ober- und Unterseite umgreifenden Scheiben od. dgl. möglich.

Zur Auswahl des Arretier- oder Verstellzustandes des aufspreizbaren Körpers kann ein am oberen Ende einer Stange, Hülse und/oder eines Rohrs angeordneter, insbesondere angelenkter oder angeformter Hebel dienen. Dies läßt sich bspw. dadurch realisieren, dass die Schwenk-, Dreh- und/oder sonstige Stellung des Hebels mit einer Einrichtung zur Veränderung des Drucks auf den bzw. in dem aufspreizbaren Körper gekoppelt ist, um diese Information weiterzugeben.

Bevorzugt ist die Schwenkachse des Hebels quer zur Längsachse der Stange und/oder der Hülse ausgerichtet, da eine solche Bewegung des aufspreizbaren Körpers durch das Führungsrohr des Kinderwagengestells unmöglich ist. Damit ist die Einstellbewegung des Handgriffs von der Auswahlbewegung des Hebels kinematisch vollständig entkoppelt, wodurch es möglich wird, diese beiden Elemente - Handgriff und Auswahlhebel - miteinander zu einer Baugruppe oder gar zu einem einzigen Teil zu integrieren.

In Weiterbildung des Erfindungsgedankens kann wenigstens ein Hebel an seinem angelenkten Ende einen die Schwenkachse zumindest bereichsweise entlang von deren Längsrichtung umgebenden Mantelabschnitt aufweisen. Dieser läßt sich dazu verwenden, eine Veränderung des Schwenkwinkels des Auswahlhebels in eine (etwa) axiale Verschiebung eines mit der Mantelfläche in Kontakt tretenden Bauteils umzusetzen.

Der die Schwenkachse umgebende Mantelabschnitt kann derart exzentrisch zu dieser Schwenkachse verlaufen, so dass sich der Abstand seines Umfangs von der Schwenkachse nockenförmig in Umfangsrichtung verändert.

Sofern sich ein solcher, nockenförmige Umfangsabschnitt auf einem stirnseitigen Bereich der Hülse od. dgl. abstützt, teilt er die vom Schwenkwinkel des Auswahlhebels abhängige Exzentrizität der Mantelfläche einem auf den spreizbaren Körper drückenden Element, vorzugsweise das obere Druck-Element, mit.

Alternativ und/oder kumulativ dazu kann ein Zugelement vorgesehen sein, um ein Druck-Element, vorzugsweise das untere, in einer bestimmten Winkelstellung des Auswahlhebels nach oben zu ziehen und damit (ebenfalls) Druck auf die betreffende, nämlich untere Oberfläche des aufspreizbaren Körpers auszuüben. Ein solches Zug-Element kann wahlweise als Stange, Rohr oder auch als Draht oder sonstiges flexibles, jedoch nur gering oder gar nicht dehnbares Zugmittel ausgebildet sein.

Es liegt im Rahmen der Erfindung, dass an der Hülse eine dieselbe außen umgreifende Manschette angeordnet ist, die in und/oder an dem Führungsrohr festlegbar ist, bspw. in Ausnehmungen desselben einrastet bzw. dieselben durchgreift und/oder das Führungsrohr außen umgreift.

Schließlich entspricht es der Lehre der Erfindung, dass am oberen Ende des Rohrs eine Abschlußkappe vorgesehen ist, welche der Führung der Hülse dient. Auch eine solche Abschlußkappe kann in Ausnehmungen des Führungsrohrs einrastbar ausgebildet sein und/oder dasselbe oben und/oder außen über- und/oder umgreift.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig.1 1: den oberen Abschnitt eines etwa vertikal verlaufenden oder stark geneigten Führungsrohrs eines Kinderwagen- oder Buggy-Gestells mitsamt eines darin dreh- und schiebeverstellbaren und arretierbaren Handgriff-Einsatzes in perspektivischer Ansicht, in arretiertem Zustand;
- Fig. 2: den Handgriff-Einsatz der Anordnung aus Fig. 1 ohne das umgebende Führungsrohr, etwa aus der selben Perspektive, ebenfalls in arretiertem Zustand;
- Fig. 3: einen Längsschnitt durch die Fig. 1;
- Fig.4: die Anordnung aus Fig. 1 in einer entsprechenden Ansicht, jedoch in dreh- und schiebeverstellbarem Zustand;
- Fig. 5: einen Längsschnitt durch die Fig. 4; sowie
- Fig. 6: eine der Fig. 2 entsprechende Darstellung einer abgewandelten Ausführungsform der Erfindung.

Ein handelsüblicher Kinderwagen, -buggy od. dgl. wird mit zwei Handgriff-Einheiten 1 ausgestattet, die in je einem Rohr 2 des Kinderwagengestells längsverschiebbar und feststellbar geführt sind.

Dabei befindet sich jeweils der eigentliche Handgriff 3 außerhalb des Führungsrohrs 2, die verstellbare Festklemmeinrichtung 4 dagegen innerhalb des Führungsrohrs 2. Bspw. aus ästhetischen Gründen, aber auch um von oben in das Rohr 2 eindringendes Regenwasser ggf. fernzuhalten, könnte auf einer Höhe unterhalb des Handgriffs 3 eine das Rohr 2 außen umschließende Mansschette vorgesehen sein; in der Zeichnung ist eine solche Manschette jedoch nicht dargestellt.

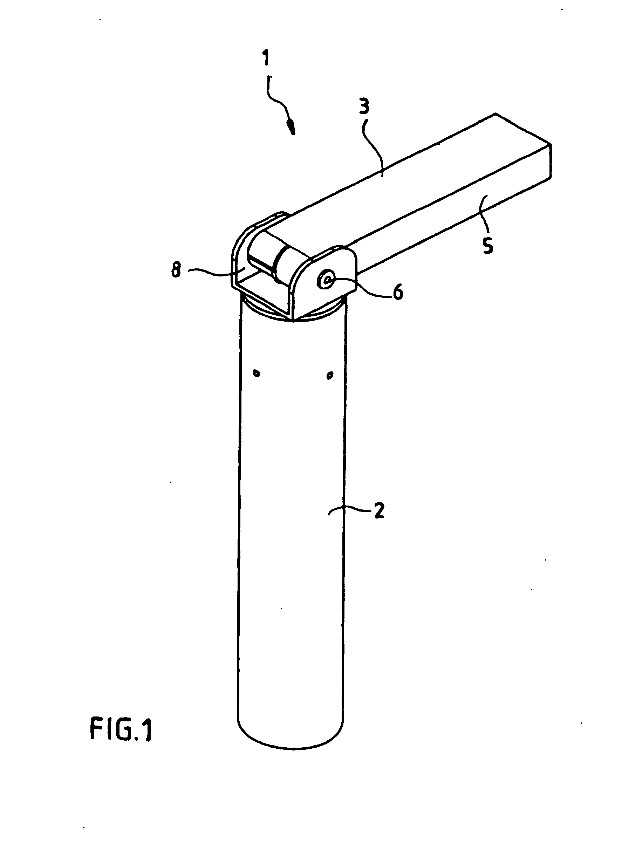

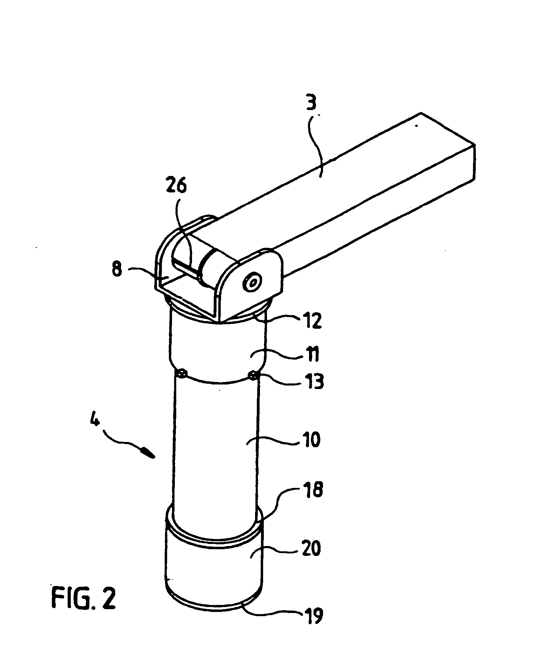

Der eigentliche Handgriff 3 ist bei der Ausführungsform nach den Fig. 1 bis 5 vereinfacht in Form eines Hebels 5 wiedergegeben; natürlich könnte er eine ergonomische Gestalt aufweisen, bspw. mit eingearbeiteten Mulden zur vertieften Aufnahme einzelner Finger, etc.

Dieser Hebel 5 ist an einer Drehachse 6 gelagert oder mit einer solchen verbunden, welche sich quer zu der Längsachse des Rohrs 2 erstreckt. Die Drehachse 6 ihrerseits ist zu beiden Längsseiten des Hebels 5 in einem Teil 7 gehalten oder gelagert, und zwar zwischen zwei zueinander etwa parallelen Lagerplatten oder -schilden 8.

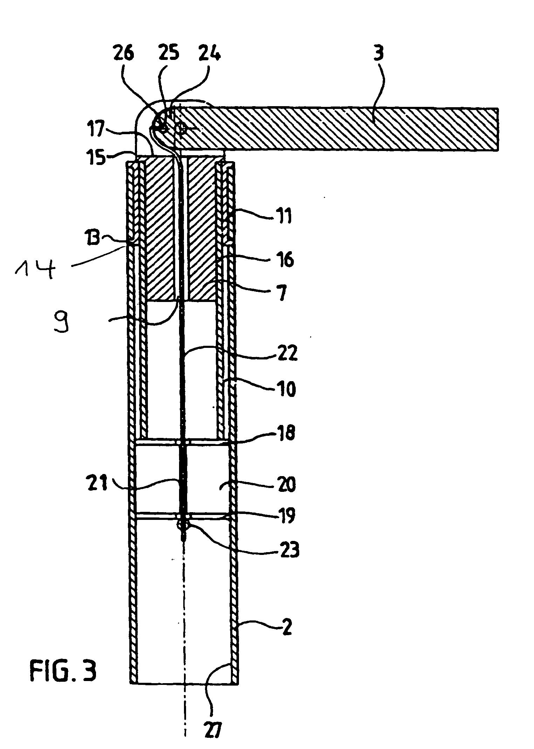

Wie man Fig. 3 entnehmen kann, hat das Teil 7 - von den angeformten Lagerschilden 8 abgesehen - etwa die Gestalt einer Hülse mit einer relativ dicken Wandstärke, so dass im Zentrum nur ein kleiner Durchgang 9 mit einem Durchmesser von bspw. 1 mm bis 5 mm, insbesondere etwa von 2 mm bis 4 mm, verbleibt.

Abgesehen von den Lagerschilden 8 und dem zentralen Durchgang 9 hat das Teil 7 etwa die Gestalt eines Korkens zum Verschließen des Rohrs 2; dessen Außendurchmesser ist jedoch kleiner als der Innendurchmesser des Rohrs 2, und er ist in einer relativ dünnwandigen Hülse 10 aufgenommen, deren Innendurchmesser an den Außendurchmesser des Teils 7 angepaßt ist, bspw. nach Art einer Preß- oder Übergangspassung.

Die Hülse 10 hat eine Wandstärke von bspw. 0,5 mm bis 2,5 mm, insbesondere von 1 mm bis 2 mm, und sie ist länger als das Teil 7, bspw. etwa doppelt so lang oder noch länger.

Der Außendurchmesser der dünnwandigen Hülse 10 ist kleiner als der Innendurchmesser des Rohrs 2, so dass dieselben reibungsfrei ineinander gleiten können. Dabei wird die Hülse 10 am oberen Ende des Rohrs 2 dreh- und verschiebbar geführt durch eine Führungsmanschette 11.

Der Außendurchmesser dieser Führungsmanschette 11 ist an den Innendurchmesser des Rohrs 2 angepaßt, während ihr Innendurchmesser an den Außendurchmesser der dünnwandigen Hülse 10 angepaßt ist, jeweils bevorzugt jeweils etwa nach Art einer Los- oder Übergangspassung. Die Führungsmanschette 11 ist innerhalb des Rohrs 2 formschlüssig fixiert, bspw. durch einen oberseitig radial nach außen überstehenden Rand oder Bund 12, der auf der Stirnseite des Rohrs 2 aufsitzt, und/oder durch radial nach außen ragende Vorsprünge 13, welche in damit korrespondierende Vertiefungen oder Ausnehmungen 14 im Mantel des Rohrs 2 einrasten können. Während die Führungsmanschette 11 durch diese Vorsprünge 13 und/oder durch ihren oberseitigen Bund 12 in dem Rohr 2 unverrückbar festgelegt ist, bildet sie für die Hülse 10 eine Art Gleitführung, die eine Relativverschiebung und/oder - verdrehung zuläßt, ein Verkanten oder sonstiges Kippen jedoch nicht.

An ihrem oberen Ende wird die Hülse 10 von einem rundumlaufenden Bund 15 des Teils 7 - im Bereich der Kante zwischen dessen Mantelfläche 16 einerseits und seiner oberen Stirnseite 17 - übergriffen, so dass sie sich gegenüber dem Teil 7 nur bis zum Anschlag an diesen Bund 15 verschieben kann.

Unterhalb des unteren Endes der Hülse 10 befindet sich eine erste Lochscheibe 18, deren Grundfläche vorzugsweise etwa kreisringförmig ist und von der Längsachse des Rohrs 2 lotrecht durchsetzt ist. Die Unterkante der Hülse 10 liegt an der Oberseite der Lochscheibe 18 an und kann mit jener verbunden, bspw. verklebt, verlötet oder verschweißt sein; dies ist für die Funktion jedoch nicht zwingend erforderlich.

Unterhalb der ersten Lochscheibe 18 gibt es eine zweite, vorzugsweise zu der ersten etwa deckungsgleiche Lochscheibe 19. Diese liegt jedoch nicht direkt an der ersten Lochscheibe 19 an, sundern erstreckt sich in einem Abstand unterhalb der ersten Lochscheibe 18, vorzugsweise parallel zu jener. Dazwischen befindet sich ein ringförmiger Körper 20.

In einer besenderen Ausfuhrungsform der Erfindung hat der ringförmige Körper 20 etwa die Gestalt eines geraden Kreiszylinders mit zueinander parallelen und deckungsgleichen Stirnseiten, und wird konzentrisch zu der Zylinderlängsachse von einer zentralen Durchgangsausnehmung 21 durchsetzt. Der ringförmige Körper 20 besteht aus einem elastischen Material wie bspw. Gummi.

Ein Zugmittel, bspw. ein Metalldraht 22, verläuft konzentrisch innerhalb des Rohrs 2 und durchgreift dabei den Durchgang 9 des Teils 7, die obere Löchscheibe 18, den ringförmigen Körper 20 sowie die untere Lochscheibe 19.

Unterhalb der unteren Lochscheibe 19 weist das Zugmittel bzw. der Metalldraht 22 eine Verdickung auf, bspw. infolge eines dortigen Knotens oder einer von dem Zugmittel bzw. Metalldraht durchsetzten und an jenem fixierten, bspw. festgeklebten Perle 23 od. dgl.

Da der Durchmesser der Perle 23 oder sonstigen Verdickung größer ist als der lichte Durchmesser der zentralen Ausnehmung in der unteren Lochscheibe 19, kann das Zugmittel bzw. der Metalldraht 22 nicht durch jene hindurchgleiten.

Das obere Ende des Zugmittels bzw. Metalldrahtes 22 ist mit dem Hebel 5 des Handgriffs 3 verbunden. Zu diesem Zweck weist der Hebel 5 einen kurzen Bereich jenseits der Drehachse 6 auf, ist also quasi als zweiarmiger Hebel ausgebildet, wobei der dem eigentlichen Handgriff 3 gegenüber liegende Arm 24 jedoch sehr kurz ist, etwa vergleichbar mit der Dicke des Hebels 5, gemessen in einer Querschnittsebene, die von der Drehachse 6 lotrecht durchsetzt ist, insbesondere mit einer maximalen Länge etwa zwischen der halben Dicke des Hebels 5 und dessen einfacher Dicke.

In bzw. an diesem kurzen, zweiten Arm 24 ist das obere Ende des Zugmittels bzw. Metalldrahtes 22 verankert, vorzugsweise auf einer von der Längsachse des Handgriffs 3 zusammen mit der Drehachse 6 aufgespannten Ebene. Zu diesem Zweck ist in dem zweiten Arm 24 des Hebels 5 - vorzugsweise entlang von dessen Mittelebene - eine zu der Drehachse 6 parallele Verankerungsbohrung 25 vorgesehen. Diese kann als Durchgangsbohrung oder als Sacklochbohrung ausgbildet sein. Sie ist jedoch - etwa entlang der halben Breite des Handgriffs 3 - über einen Schlitz 26 mit der Stirnseite des zweiten Hebelarms 24 verbunden. Während die Breite des Schlitzes gerade etwa dem Durchmesser des Zugmittels bzw. Metalldrahtes entspricht, ist der Durchmesser der dahinter liegenden Verankerungsbohrung 25 deutlich größer, bspw. doppelt so groß.

Auch am oberen Ende des Zugmittels bzw. Metalldrahtes 22 befindet sich eine Verdickung; diese kann - wie auch am unteren Ende des Zugmittels bzw. Metalldrahtes 22 - bspw. durch einen Knoten gebildet sein, aber auch durch ein am Ende des Zugmittels festgelegtes Element, das von dem Zugmittel durch- oder umgriffen wird und mit jenem verbunden ist, bspw. durch eine Klebe-, Löt- oder Schweißverbindung, aber auch durch einen Knoten od. dgl. Der Durchmesser der Verdickung ist größer als die Breite des Schlitzes 26, aber kleiner als der Durchmesser der Verankerungsbohrung 25 in dem zweiten Arm 24 des Hebels 5. Daher kann die Verdickung von einer Mündung der Verankerungsbohrung 25 in dieselbe hineingeschoben werden, derart, dass dabei das Zugmittel bzw. der Metalldraht 22 selbst durch den Schlitz 26 hindurchtritt. Die Verdickung kann innerhalb der Verankerungsbohrung 25 fixiert sein, bspw. mit Klebstoff. Ggf. könnte aber auch das (ggf. verdickte) Ende des Zugmittels bzw. Metalldrahtes 22 von einer aus Kunststoff im Spritzgußverfahren hergestellten Hebel-Baugruppe 5,24 umspritzt und dadurch unlösbar mit jener verbunden sein.

Von seinem Austrittspunkt an dem Schlitz 26 aus biegt sich das Zugmittel bzw. der Metalldraht 22 nach unten zum Rohr 2 hin um und tritt schließlich in die Mündung des Durchgangs 9 in dem Teil 7 ein.

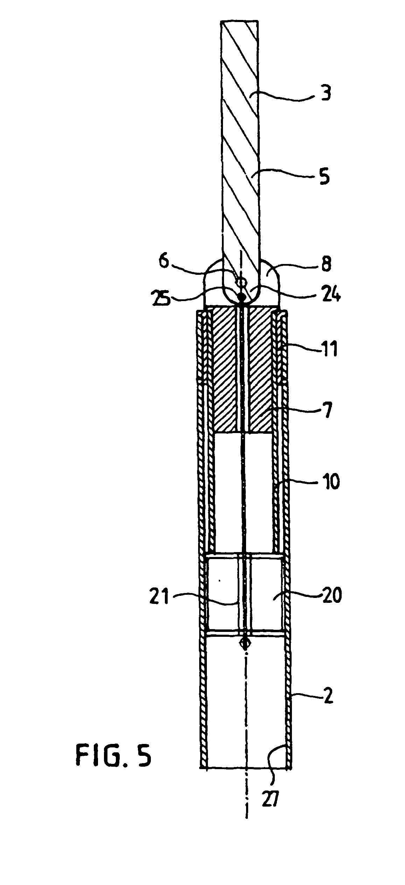

Erstreckt sich der Hebel 5 bzw. Handgriff 3 etwa in Richtung der Längsachse des Rohrs 2, wie dies in fig. 5 dargestellt ist, so liegt die Verankerungsbohrung etwa auf der Längsachse des Rohrs 2 unweit von dessen oberseitiger Mündung. Die Länge des Zugmittels bzw. Metalldrahtes 22 ist derart bemessen, dass es/er sich in diesem Zustand ohne Spannung von dem Handgriff 3 bis zu der unteren Lochplatte 19 erstrecken kann.

Die Festklemmeinrichtung 4 ist in diesem Zustand kräftefrei, und dabei nimmt der elastische, ringförmige Körper 20 seine ursprüngliche Gestalt an, wobei sein Außendurchmesser geringfügig kleiner ist als der Innendurchmesser des Rohrs 2. Daher kann dieser leichtgängig innerhalb des Rohrs 2 verschoben werden, und zwar auf und ab, wobei die Höhenposition des Handgriffs 3 einstellbar ist, als auch nach links und rechts gedreht werden, wobei die Drehstellung des Handgriffs 3 gegenüber dem Rohr 2 einstellbar ist.

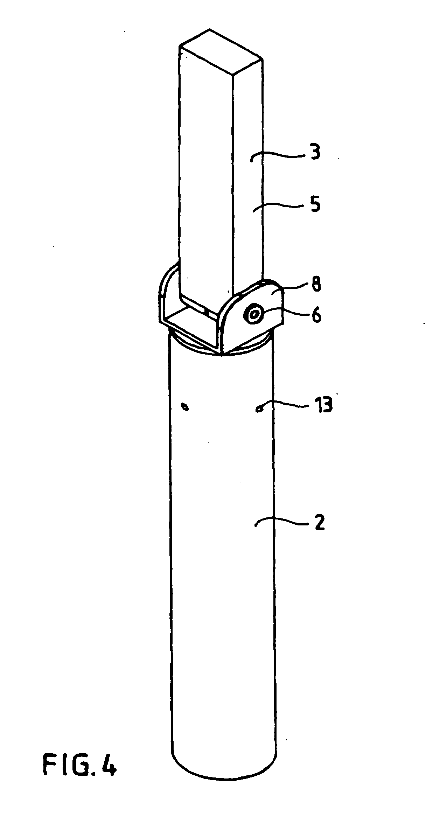

Sobald eine Mutter oder sonstige Betreuungsperson solchermaßen eine für sich geeignete Stellung des Handgriffs 3 gefunden hat, wird der Hebel 5 des Handgriffs 3 von der Position gemäß Fig. 4 und 5 in die Position gemäß Fig. 1 bis 3 herabgeschwenkt. Wie insbesondere ein Vergleich zwischen den Fig. 3 und 5 ergibt, wandert dabei die Verankerungsbohrung 25 deutlich von der ersten Position nahe der Mündung des Rohrs 2 weg: Sie liegt in Fig. 3 etwa auf Höhe der Drehachse 6, nicht darunter, und ist überdies seitlich verschoben. Das Zumittel bzw. der Metalldraht 22 wird dabei ein Stück weit aus dem Rohr 2 herausgezogen. Dabei wird die untere Lochplatte 19, durch welche das Zugmittel hindurchtritt, aber infolge seiner unteren Verdickung nicht hindurchrutschen kann, nach oben mitgenommen, die obere Lochplatte 18, welche keinen Kontakt zu dem Zugmittel bzw. Metalldraht 22 hat, dagegen nicht. Die Folge davon ist, dass der (vertikale) Abstand zwischen den beiden Lochplatten 18, 19 sich um ein entsprechendes Maß verringert.

Dieser Abstand ist allerdings nun kleiner als die Höhe des elastischen, ringförmigen Körpers 20. Dieser wird daher in axialer Richtung, d.h. in einer Richtung parallel zur Längsachse des Rohrs 2, gestaucht. Er versucht, dieser Verformung dadurch auszuweichen, dass er sich gleichzeitig in radialer Richtung aufweitet, insbesondere radial nach außen. Da aber sein ursprünglicher Außendurchmesser nur geringfügig kleiner ist als der Innendurchmesser des Rohrs 2, tritt er dabei in Kontakt mit der Innenseite 27 des Rohrs 2. Da das Rohr vorzugsweise aus einem steifen Material besteht, bspw. Metall, weicht dieses nicht zurück, sondern widersetzt sich dem radialen Druck des ringförmigen Körpers 20. Dieser wird also fest und damit reibschlüssig an die Innenseite 27 des Rohrs 2 gepreßt und dabei sozusagen unverrückbar arretiert.

Über die obere Lochplatte 18, die Hülse 10, das Teil 7 und die Drehachse 6 teilt der solchermaßen im Rohr 2 fixierte Körper 20 seine vertikale Position und seine Drehstellung dem Hebel 5 bzw. Handgriff 3 mit und fixiert diesen ebenfalls gegenüber dem Rohr 2. Der Handgriff 3 ist nun in der gewünschten Position arretiert, der Kinderwagen kann benutzt werden.

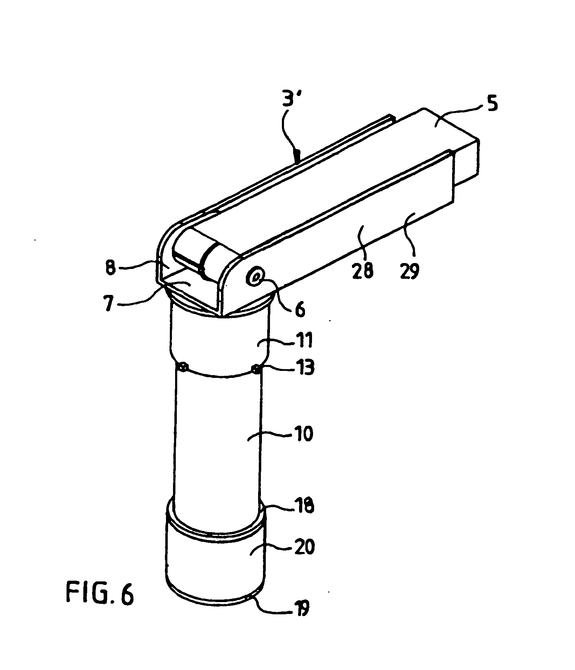

In Fig. 6 ist eine abgewandelte, hier nicht beanspruchte Ausführungsform der Erfindung wiedergegeben. Diese unterscheidet sich jedoch gegenüber der zuvor beschriebenen Ausführungsform lediglich dadurch, dass die beiden Lagerplatten bzw. -schilde 8 innerhalb ihrer Ebene in einer Richtung verlängert sind, und zwar jeweils in der selben Richtung quer zur Längsachse des Rohrs 2. Dadurch erhalten die beiden Lagerschilde jeweils eine längliche Gestalt in Form einer langgestreckten Platte 28. Dies beiden Platten laufen etwa parallel nebeneinander, mit etwa konstantem Abstand, und sie werden im Bereich ihrer unteren Kante, also etwa auf (axialer) Höhe der oberen Stirnseite des Körpers 7, durch einen Mittelsteg miteinander verbunden. Damit ergibt sich insgesamt etwa die Form eines seitlichen Ansatzes 29 mit einem etwa U-förmigen Querschnitt.

Der Querschnitt der Mulde innerhalb dieses Ansatzes 29 entspricht etwa dem Querschnitt des Hebels 5 bzw. ist geringfügig größer als jener, so dass der Hebel 5 beim Herabschwenken problemlos in die Mulde des Ansatzes 29 eintauchen kann, wie dies in Fig. 6 zu sehen ist. Der Ansatz 29 kann den Hebel 5 dabei etwa entlang dessen gesamter Länge und vorzugsweise auch etwa entlang dessen gesamter Höhe umgreifen.

Die Gesamtheit aus Ansatz 29 und in diesen hinein geschwenktem Hebel 5 bildet bei dieser Ausführungsform den Handgriff 3'. Der Vorteil besteht darin, dass eine Person während des Einstellens des Handgriffs 3' an dem Ansatz 29 die jeweils eingestellte Höhe und Drehposition ständig kontrollieren kann, bevor diese durch Herabschwenken des Hebels 5 arretiert wird.

Die äußere Gestalt des Ansatzes 29 kann ergonomisch gestaltet sein, bspw. mittels Griffmulden od. dgl.

Verschiedene weitere hier nicht beanspruchte Modifikationen der Erfindung sind denkbar. So können anstelle eines einzigen ringförmigen Körpers 20 auch mehrere solche Körper verwendet werden, welche bspw. in axialer Richtung hinter- bzw. übereinander angeordnet sein können; dieselben können direkt aneinander anliegen oder durch zwischengelegte Platten voneinander getrennt sein.

Zwischen dem/den ringförmigen Körper(n) 20 und den angrenzenden Lochplatten 18, 19, insbesondere im Bereich der oberen Lochplatte 18, könnte ein Formschluß herbeigeführt sein, um eine Relativverdrehung zu verhindern, bspw. durch an einer Lochplatte 18, 19 angeformte Fortsätze oder durch Ausstanzen und Umbiegen von Laschen aus einer Lochplatte 18, 19, welche Fortsätze, Biegelaschen od. dgl. sodann in entsprechende Vertiefungen des/der ringförmigen Körper(s) eintauchen können.

Außerdem könnte anstelle eines flexiblen Zugmittels bzw. Metalldrahtes 22 evtl. auch eine Stange oder sogar ein Rohr verwendet werden oder ein ggf. gebogener Draht, aber auch eine Kette od. dgl.

Bei der bevorzugten Ausführungsform wird im Festklemmzustand auf den/die ringförmigen Körper 20 ein axialer Druck ausgeübt, wobei zwei diese(n) Körper 20 über- bzw. untergreifende Elemente, bspw. (Loch-) Platten oder (Loch-) Scheiben 18, 19, einander angenähert sind. Dieser Zustand sollte bei fehlenden äußeren Kräften stabil sein. Dies kann bspw. durch hemmende Reibungskräfte in einem Lagerteil 6, 8 bewirkt werden oder durch eine geometrische Anordnung, bspw. nach Art eines Kniehebels, dessen Endstellungen stabil sind, oder aber durch eine Verrastung, bspw. zwischen dem Hebel 3' und einem denselben umgreifenden Fortsatz 29.

In einem anderen Zustand wird dagegen kein oder ein geringerer axialer Druck auf den/die ringförmigen Körper 20 ausgeübt. Dieser gelöste Zustand ist beim Fehlen äußerer Kräfte vorzugsweise, jedoch nicht unbedingt zwingend stabil; er könnte bspw. durch ein rückstellendes Federelement in den anderen Festklemmzustand überführt werden, so dass zum Lösen und Verstellen stets das rückstellende Federelement zu überwinden wäre.

Zum Umschalten vom gelösten in den festgeklemmten Zustand sind verschiedene Maßnahmen denkbar: Einmal kann an dem den ringförmigen Körper 20 untergreifenden Element 19 ein nach oben gerichteter (zusätzlicher) Zug ausgeübt werden, und/oder es wird an dem den ringförmigen Körper 20 übergreifenden Element 18 ein nach unten gerichteter (zusätzlicher) Druck ausgeübt (bspw. mittels eines Nockens an einem verschwenkbaren Hebel 5); beide Maßnahmen werden entweder miteinander kombiniert, oder das jeweils andere Element 18, 19 wird währenddem festgehalten, bspw. indem es mit dem Handgriff 3 oder einem Lager 8 desselben verbunden oder integriert ist.

### Bezugszeichenliste

- 1: Handgriff-Einheit
- 2: Rohr
- 3: Handgriff
- 4: Festklemmeinrichtung
- 5: Hebel
- 6: Drehachse
- 7: Teil
- 8: Lagerplatte
- 9: Durchgang
- 10: Hülse
- 11: Führungsmansschette
- 12: Bund
- 13: Vorsprung
- 14: Ausnehmung
- 15: Bund
- 16: Mantelfläche
- 17: Stirnfläche
- 18: erste Lochscheibe
- 19: zweite Lochscheibe
- 20: ringförmiger Körper
- 21: Durchgangsausnehmung
- 22: Metalldraht
- 23: Perle
- 24: Arm
- 25: Verankerungsbohrung

- 26: Schlitz
- 27: Innenseite
- 28: Platte
- 29: Ansatz

## Patentansprüche

1. Kinderwagen oder -buggy mit einem Gestell, mehreren Rädern, einem Aufsatz und wenigstens einem höhen- und/oder drehverstellbaren Handgriff (3), wobei der/die Handgriff(e) (3) mit wenigstens einem in (je) ein Rohr (2) des Gestells eintauchenden, elastischen Element gekoppelt oder verbunden ist/sind, welches als ringförmiger, zweifach zusammenhängender Körper ausgebildet ist, der von einer zentralen Durchgangsausnehmung durchsetzt ist, und dessen Querschnitt in einem ersten Zustand (geringfügig) kleiner ist als der Innenquerschnitt des Rohres (2), und in einem zweiten Zustand zumindest partiell nach außen preß- oder spreizbar ist, um sich innerhalb des Rohres (2) festzuklemmen, **dadurch gekennzeichnet, dass** der elastische Körper zwei zueinander parallele und deckungsgleiche Stirnseiten aufweist und sich zwischen einer oberen Lochscheibe (18) und einer unteren Lochscheibe (19), jeweils aus einem steifen Material, befindet, deren Abstand in axialer Richtung verstellbar ist, um axialen Druck auf die Stirnseiten des dazwischen befindlichen, elastischen Körpers auszuüben und diesen in axialer Richtung zu stauchen, wobei dieser der axialen Stauchung infolge seiner homogenen Elastizitätseigenschaften durch eine Streckung in radialer Richtung ausweicht, und wobei die untere Lochscheibe (19) mit einem Zugmittel gekoppelt ist, während an der Oberseite der oberen Lochscheibe (18) die Unterkante eines (-er) das Zugmittel umgebenden Rohrs oder Hülse (10) anliegt.

2. Kinderwagen oder -buggy mit einem Gestell, mehreren Rädern, einem Aufsatz und wenigstens einem höhen- und/oder drehverstellbaren Handgriff (3), wobei der/die Handgriff(e) (3) mit wenigstens einem in (je) ein Rohr (2) des Gestells eintauchenden, elastischen Element gekoppelt oder verbunden ist/sind, welches als ringförmiger, zweifach zusammenhängender Körper ausgebildet ist, der von einer zentralen Durchgangsausnehmung durchsetzt ist, und dessen Querschnitt in einem ersten Zustand (geringfügig) kleiner ist als der Innenquerschnitt des Rohres (2), und in einem zweiten Zustand zumindest partiell nach außen preß- oder spreizbar ist, um sich innerhalb des Rohres (2) festzuklemmen, **dadurch gekennzeichnet, dass** der elastische Körper etwa die Gestalt eines geraden Kreiszylinders aufweist mit zwei zueinander parallelen und deckungsgleichen Stirnseiten sowie einer konzentrisch zu der Zylinderlängsachse verlaufenden Durchgangsausnehmung (21), und sich zwischen einer oberen Lochscheibe (18) und einer unteren Lochscheibe (19), jeweils aus einem steifen Material, befindet, deren Abstand in axialer Richtung verstellbar ist, um axialen Druck auf die Stirnseiten des dazwischen befindlichen, elastischen Körpers auszuüben und diesen in axialer Richtung zu stauchen, wobei dieser der axialen Stauchung durch eine Streckung in radialer Richtung ausweicht, und wobei die untere Lochscheibe (19) mit einem Zugmittel gekoppelt ist, während an der Oberseite der oberen Lochscheibe (18) die Unterkante eines (-er) das Zugmittel umgebenden Rohrs oder Hülse (10) anliegt, welche(s) die betreffende Lochscheibe (18) mit der Handgriff-Einheit verbindet.

3. Kinderwagen oder -buggy nach einem der vorhergehenden Ansprüche, **dadurch gekennzeichnet, dass** eines der beiden gegeneinander verstellbaren Elemente als Stange, Rohr, Draht (22) oder Zugmittel und das andere als diese Stange, Rohr, Draht (22) oder Zugmittel umgebendes Rohr, Hülse (10) od. dgl. ausgebildet oder mit derartigen Elementen ausgestattet ist, wobei vorzugsweise die Stange, Rohr, Draht (22) oder Zugmittel den/die elastischen Ring(e) durchgreift.

4. Kinderwagen oder -buggy nach Anspruch 3, **dadurch gekennzeichnet, dass** die Stange, Rohr, Draht (22) oder Zugmittel sich jenseits, d.h. unterhalb des/der elastischen Rings (-e) querschnittlich erweitert, bspw. durch die daran festgelegte Lochscheibe (19).

5. Kinderwagen oder -buggy nach einem der Ansprüche 3 oder 4, **dadurch gekennzeichnet, dass** die Stange, Rohr, Draht (22) oder Zugmittel einen von der Kreisform abweichenden Querschnitt aufweist, bspw. einen elliptischen, länglichen, kreuz- oder sternförmigen Querschnitt.

6. Kinderwagen oder -buggy nach einem der vorhergehenden Ansprüche, **dadurch gekennzeichnet, dass** eine Stange, Rohr, Draht (22) oder Zugmittel gegenüber einem diese umgebenden Rohr, Hülse (10) od. dgl. in axialer Richtung des Rohrs (2) verschiebbar ist.

7. Kinderwagen oder -buggy nach einem der vorhergehenden Ansprüche, **dadurch gekennzeichnet, dass** im Bereich des oberen Endes einer Stange, eines Rohrs, Drahtes (22) oder Zugmittels und/oder eines diese(s) umgebenden Rohrs, Hülse (10) od. dgl. ein Hebel (5) angeordnet ist, vorzugsweise angelenkt oder angeformt.

8. Kinderwagen oder -buggy nach Anspruch 7, **dadurch gekennzeichnet, dass** die Schwenkachse (6) des Hebels (5) quer zur Längsachse des Rohrs (2) ausgerichtet ist.

9. Kinderwagen oder -buggy nach Anspruch 7 oder 8, **dadurch gekennzeichnet, dass** wenigstens ein Hebel (5) im Bereich seiner Anlenkung (6) einen vorzugsweise kürzeren, zweiten Hebelarm (24) aufweist, mit einem die Schwenkachse (6) zumindest bereichsweise entlang von deren Längsrichtung umgebenden Mantelabschnitt.

10. Kinderwagen oder -buggy nach Anspruch 9, **dadurch gekennzeichnet, dass** im Bereich des zweiten Hebelarms (24) die Stange, das Rohr, Draht (22) oder (sonstiges) Zugmittel befestigt ist, welches sich in das Rohr (2) hinein erstreckt und mit dem auseinanderpreß- oder spreizbaren Element (20) über die Lochscheibe (19) gekoppelt ist.

11. Kinderwagen oder -buggy nach einem der vorhergehenden Ansprüche, **dadurch gekennzeichnet, dass** wenigstens ein Hebel (5) an seinem angelenkten Ende einen die Schwenkachse (6) zumindest bereichsweise entlang von deren Längsrichtung umgebenden Mantelabschnitt (24) aufweist.

12. Kinderwagen oder -buggy nach Anspruch 11, **dadurch gekennzeichnet, dass** der Mantelabschnitt (24) exzentrisch zu der betreffenden Schwenkachse (6) verläuft, so dass sich der Abstand seines Umfangs von der Schwenkachse nockenförmig in Umfangsrichtung verändert.

13. Kinderwagen oder -buggy nach Anspruch 12, **dadurch gekennzeichnet, dass** sich der nockenförmige Umfangsabschnitt auf einem stirnseitigen Bereich der Hülse od. dgl. abstützt.

14. Kinderwagen oder -buggy nach einem der Ansprüche 12 oder 13, **dadurch gekennzeichnet, dass** der Nocken solchermaßen angeordnet ist, dass er bei Zusammendrücken der beiden Hebel die Schwenkachse und die damit gekoppelte Stange in axialer Richtung von der Hülse od. dgl. wegdrückt.

15. Kinderwagen oder -buggy nach einem der vorhergehenden Ansprüche, **dadurch gekennzeichnet, dass** am oberen Ende des Rohrs (2) eine Abschlußkappe oder Führungsmanschette (11) vorgesehen ist, welche der Führung der Hülse (10) in dem Rohr (2) dient.

## Claims

1. Baby carriage or stroller having a chassis, plural wheels, a superstructure and at least one heightwise and/or rotationally adjustable handle (3), said handle(s) (3) being coupled or connected to at least one elastic element, (each of) which immerses in a (respective) tube (2) of said chassis, said element being configured as an annular, double-connected body penetrated by a central through-opening and having a cross section that in a first state is (slightly) smaller than the inner cross section of said tube (2), and in a second state can be at least partially pressed or spread outward so as to wedge firmly within said tube (2), **characterized in that** said elastic body has two mutually parallel and coincident end faces and is disposed between an upper perforated disk (18) and a lower perforated disk (19), each made of a rigid material, the spacing between the two being adjustable in the axial direction, in order to exert axial pressure on the end faces of said elastic body disposed between them and to compressively deform it in the axial direction, wherein said elastic body, by virtue of its homogeneous elasticity properties, avoids said axial compressive deformation by stretching in the radial direction, and wherein said lower perforated disk (19) is coupled to a traction means, whereas the bottom edge of a tube or sleeve (10) surrounding said traction means bears against the upper face of said upper perforated disk (18).

2. Baby carriage or stroller having a chassis, plural wheels, a superstructure and at least one heightwise and/or rotationally adjustable handle (3), said handle(s) (3) being coupled or connected to at least one elastic element, (each of) which immerses in a (respective) tube (2) of said chassis, said element being configured as an annular, double-connected body penetrated by a central through-opening and having a cross section that in a first state is (slightly) smaller than the inner cross section of said tube (2), and in a second state can be at least partially pressed or spread outward so as to wedge firmly within said tube (2), **characterized in that** said elastic body has approximately the shape of a right circular cylinder with two mutually parallel and coincident end faces and with a through-opening (21) that extends concentrically with the longitudinal axis of said cylinder, and is disposed between an upper perforated disk (18) and a lower perforated disk (19), each made of a rigid material, the spacing between the two being adjustable in the axial direction, in order to exert axial pressure on the end faces of said elastic body disposed between them and to compressively deform it in the axial direction, wherein said elastic body avoids said axial compressive deformation by expanding in the radial direction, and wherein said lower perforated disk (19) is coupled to a traction means, whereas the bottom edge of a tube or sleeve (10) surrounding said traction means and connecting the respective said perforated disk (18) to said handle unit bears against the upper face of said upper perforated disk (18).

3. Baby carriage or stroller according to one of the preceding claims, **characterized in that** one of said two mutually adjustable elements is configured as a rod, tube, wire (22) or traction means and the other is configured as a tube, sleeve (10) or the like surrounding said rod, tube, wire (22) or traction means, or is equipped with such elements, whereby preferably the rod, tube, wire (22) or traction means extends through said elastic ring(s).

4. Baby carriage or stroller according to claim 3, **characterized in that** the rod, tube, wire (22) or traction means widens cross-sectionally beyond, i.e. below, said elastic ring(s), for example by means of the perforated disk (19) affixed thereto.

5. Baby carriage or stroller according to one of claims 3 or 4, **characterized in that** the rod, tube, wire (22) or traction means has a cross section deviating from the circular, for example an elliptical, elongate, X-shaped or star-shaped cross section.

6. Baby carriage or stroller according to one of the preceding claims, **characterized in that** a rod, tube, wire (22) or traction means is displaceable in the axial direction of said tube (2) in relation to a tube, sleeve (10) or the like surrounding it.

7. Baby carriage or stroller according to one of the preceding claims, **characterized in that** a lever (5) is disposed, preferably articulated or formed on, in the region of the top end of a rod, tube, wire (22) or traction means and/or a tube, sleeve (10) or the like surrounding it.

8. Baby carriage or stroller according to claim 7, **characterized in that** the pivot axis (6) of said lever (5) is oriented transversely to the longitudinal axis of said tube (2).

9. Baby carriage or stroller according to claim 7 or 8, **characterized in that** at least one lever (5) has in the region of its articulation (6) a preferably shorter, second lever arm (24) having a jacket portion that surrounds said pivot axis (6) at least regionally along the longitudinal direction thereof.

10. Baby carriage or stroller according to claim 9, **characterized in that** fastened in the region of said second lever arm (24) is the rod, tube, wire (22) or (other) traction means that extends into said tube (2) and is coupled via the perforated disk (19) to the element (20) that can be pressed apart or spread.

11. Baby carriage or stroller according to one of the preceding claims, **characterized in that** at least one lever (5) has at its articulated end a jacket portion (24) that surrounds said pivot axis (6) at least regionally along the longitudinal direction thereof.

12. Baby carriage or stroller according to claim 11, **characterized in that** said jacket portion (24) extends eccentrically to the respective said pivot axis (6), such that the distance of its circumference from the pivot axis changes in a cam-shaped manner in the circumferential direction.

13. Baby carriage or stroller according to claim 12, **characterized in that** the cam-shaped circumferential portion rests on an end-face region of said sleeve or the like.

14. Baby carriage or stroller according to one of claims 12 or 13, **characterized in that** said cam is arranged in such a way that it presses said pivot axis and the thereto-coupled said rod in the axial direction away from said sleeve or the like when the two said levers are pressed together.

15. Baby carriage or stroller according to one of the preceding claims, **characterized in that** provided at the top end of said tube (2) is an end cap or guide cuff (11) that serves to guide said sleeve (10) within said tube (2).

## Revendications

1. Poussette ou poussette canne pour enfants avec un châssis, plusieurs roues, une superstructure et au moins une poignée réglable en hauteur et/ou orientable (3), où la/les poignée(s) (3) est/sont couplée(s) ou reliée(s) à au moins un élément élastique s'enfonçant dans (respectivement) un tube (2) du châssis, lequel est réalisé sous forme de corps annulaire, doublement connexe, qui est interpénétré par une encoche traversante centrale et dont la section dans une première phase est (légèrement) inférieure à la section intérieure du tube (2), et dans une deuxième phase peut au moins partiellement être soumise à une pression ou à un écartement vers l'extérieur pour être serrée à l'intérieur du tube (2), **caractérisée en ce que** le corps élastique présente deux parties frontales parallèles l'une par rapport à l'autre et identiques et qu'il est placé entre un disque perforé supérieur (18) et un disque perforé inférieur (19), respectivement en un matériau rigide, dont l'écartement en sens axial est réglable pour exercer une pression axiale sur les parties frontales du corps élastique placé entre ces parties et pour comprimer ce dernier dans le sens axial, ce dernier évitant l'écrasement axial suite à ses propriétés d'élasticité homogènes par un allongement en sens radial, et où le disque perforé inférieur (19) est couplé à un moyen de tension tandis que le bord inférieur d'un tube ou d'un manchon (10) entourant: le moyen de tension est au niveau de la face supérieure du disque perforé supérieur (18).

2. Poussette ou poussette canne pour enfants avec un châssis, plusieurs roues, une superstructure et au moins une poignée réglable en hauteur et/ou orientable (3), où la/les poignée(s) (3) est/sont couplée(s) ou reliée(s) à au moins un élément élastique s'enfonçant dans (respectivement) un tube (2) du châssis, lequel est réalisé sous forme de corps annulaire, doublement connexe, qui est interpénétré par une encoche traversante centrale et dont la section dans une première phase est (légèrement) inférieure à la section intérieure du tube (2), et dans une deuxième phase peut au moins partiellement être soumise à une pression ou à un écartement vers l'extérieur pour être serrée à l'intérieur du tube (2), **caractérisée en ce que** le corps élastique présente approximativement la forme d'un cylindre circulaire droit avec deux parties frontales parallèles l'une par rapport à l'autre et identiques ainsi qu'une encoche traversante (21) concentrique par rapport à l'axe longitudinal du cylindre, et qu'il est placé entre un disque perforé supérieur (18) et un disque perforé inférieur (19), respectivement en un matériau rigide, dont l'écartement en sens axial est réglable pour exercer une pression axiale sur les parties frontales du corps élastique placé entre ces parties et pour comprimer ce dernier dans le sens axial, ce dernier évitant l'écrasement axial par un allongement en sens radial, et où le disque perforé inférieur (19) est couplé à un moyen de tension tandis que le bord inférieur d'un tube ou d'un manchon (10) entourant le moyen de tension, lequel relie le disque perforé en question (18) à l'unité poignée, est au niveau de la face supérieure du disque perforé supérieur (18).

3. Poussette ou poussette canne pour enfants selon l'une des revendications précédentes, **caractérisée en ce que** l'un des deux éléments réglables l'un par rapport à l'autre est réalisé sous forme de tige, tube, fil (22) ou moyen de tension et que l'autre élément est réalisé sous forme de tube, manchon (10) ou sim. entourant la tige, le tube, le fil (22) ou le moyen de tension ou est équipé de tels éléments, où de préférence la tige, le tube, le fil (22) ou le moyen de tension traverse l'anneau/les anneaux élastique(s).

4. Poussette ou poussette canne pour enfants selon la revendication 3, **caractérisée en ce que** la tige, le tube, le fil (22) ou le moyen de tension s'étend transversalement au-delà, c.-à-d. en dessous de l'anneau/des anneaux élastique(s), par exemple à travers le disque perforé (19) qui y est fixé.

5. Poussette ou poussette canne pour enfants selon l'une des revendications 3 ou 4, **caractérisée en ce que** la tige, le tube, le fil (22) ou le moyen de tension présente une section différente de la forme circulaire, par exemple une section elliptique, allongée, en forme de croix ou d'étoile.

6. Poussette ou poussette canne pour enfants selon l'une des revendications précédentes, **caractérisée en ce qu'**une tige, un tube, un fil (22) ou un moyen de tension peut être déplacé par rapport au tube, manchon (10) ou sim. entourant ce dernier/cette dernière dans le sens axial du tube (2).

7. Poussette ou poussette canne pour enfants selon l'une des revendications précédentes, **caractérisée en ce qu'**au niveau de l'extrémité supérieure d'une tige, d'un tube, d'un fil (22) ou d'un moyen de tension et/ou d'un tube, manchon (10) ou sim. entourant ce dernier/cette dernière est placé un levier (5), de préférence articulé ou moulé.

8. Poussette ou poussette canne pour enfants selon la revendication 7, **caractérisée en ce que** l'axe de pivotement (6) du levier (5) est positionné transversalement par rapport à l'axe longitudinal du tube (2).

9. Poussette ou poussette canne pour enfants selon la revendication 7 ou 8, **caractérisée en ce qu'**au moins un levier (5) présente au niveau de son articulation (6) un deuxième bras de levier de préférence plus court (24), avec une section d'enveloppe entourant tout au moins zone par zone l'axe de pivotement (6) dans son sens longitudinal.

10. Poussette ou poussette canne pour enfants selon la revendication 9, **caractérisée en ce qu'**au niveau du deuxième bras de levier (24) est fixé la tige, le tube, le fil (22) ou tout (autre) moyen de tension, lequel s'étend dans le tube (2) et est couplé avec l'élément pouvant être soumis à une pression ou à un écartement (20) par le biais du disque perforé (19).

11. Poussette ou poussette canne pour enfants selon l'une des revendications précédentes, **caractérisée en ce qu'**au moins un levier (5) présente au niveau de son extrémité articulée une section d'enveloppe (24) entourant tout au moins zone par zone l'axe de pivotement (6) dans son sens longitudinal.

12. Poussette ou poussette canne pour enfants selon la revendication 11, **caractérisée en ce que** la section d'enveloppe (24) est excentrique par rapport à l'axe de pivotement (6) en question, de sorte que l'écartement de sa circonférence varie de l'axe de pivotement en forme de came dans le sens circonférentiel.

13. Poussette ou poussette canne pour enfants selon la revendication 12, **caractérisée en ce que** la section circonférentielle en forme de came s'appuie sur une partie frontale du manchon ou sim.

14. Poussette ou poussette canne pour enfants selon l'une des revendications 12 ou 13, **caractérisée en ce que** la came est disposée de telle façon qu'elle repousse en exerçant une pression sur les deux leviers l'axe de pivotement et la tige qui y est couplée dans le sens axial du manchon ou sim.

15. Poussette ou poussette canne pour enfants selon l'une des revendications précédentes, **caractérisée en ce qu'**à l'extrémité supérieure du tube (2) est prévu un capot d'extrémité ou une manchette de guidage (11) qui sert au guidage du manchon (10) dans le tube (2).
